# EUROPÄISCHE PATENTANMELDUNG

(11) **EP 2 327 862 A1**
(43) Veröffentlichungstag der Anmeldung: **01.06.2011**
(21) Anmeldenummer: 10014445.0
(22) Anmeldetag: 10.11.2010
(51) Int. Cl.: F01M 5/00

(54) **Eine Schmiermittelversorgungseinrichtung für eine Brennkraftmaschine und ein Verfahren zum Betrieb einer solchen Schmiermittelversorgungseinrichtung**

(30) Priorität: 27.11.2009 DE 102009056161
(71) Anmelder: Volkswagen Aktiengesellschaft, 38436 Wolfsburg (DE)
(72) Erfinder: Walkling, Friedhelm, 38114 Braunschweig (DE); Caesar, Lars, 38550 Isenbüttel (DE); Schreeck, Nico, 38553 Wasbüttel (DE); Groenewold, Christian, 58089 Hagen (DE)

(57) **Zusammenfassung**

Die Erfindung betrifft eine zur Schmiermittelversorgung einer Brennkraftmaschine bestimmte Schmiermittelversorgungseinrichtung (1) sowie ein Verfahren zu deren Betrieb. Die Schmiermittelversorgungseinrichtung (1) umfasst eine der Brennkraftmaschine zugeordnete Schmiermittelzuführleitung und einen von dem Schmiermittel durchströmbaren Wärmetauscher (3). In einer Kaltlaufphase wird das Schmiermittel unter Umgehung des Wärmetauschers (3) einer mit der Brennkraftmaschine verbundenen Bypassleitung (6) zugeführt, sodass es zu einer wesentlich schnelleren Erwärmung der Brennkraftmaschine kommt. Hierzu hat die Schmiermittelversorgungseinrichtung (1) ein Bypassventil (7) mit einem in einer Schiebeführung (8) axial beweglichen Ventilschaft (9), welcher einen Dichtungskolben (10) zur variablen Aufteilung des Schmiermittelstroms aufweist und der wahlweisen Zuführung zu der Bypassleitung (6) oder dem Wärmetauscher (3) dient.

## Beschreibung

Die Erfindung betrifft eine zur Schmiermittelversorgung einer Brennkraftmaschine bestimmte Schmiermittelversorgungseinrichtung mit einer der Brennkraftmaschine zugeordneten Schmiermittelzuführleitung; einer Schmiermittelrückführleitung und einem in Strömungsrichtung vor der Brennkraftmaschine in der Schmiermittelzuführleitung angeordneten Wärmetauscher. Weiterhin betrifft die Erfindung ein Verfahren zum Betrieb einer solchen, einen Wärmetauscher aufweisenden Schmiermittelversorgungseinrichtung einer Brennkraftmaschine.

Eine Schmiermittelversorgungseinrichtung sowie ein Verfahren der gattungsgemäßen Art sind seit geraumer Zeit in den unterschiedlichsten Ausführungsformen bekannt.

So beschreibt die DE 101 07 018 A1 eine Verbrennungskraftmaschine mit einem Motorblock, einer Ölwanne für das Motorenöl und mit einem Abgasrohr für die Verbrennungsgase, wobei ein Wärmetauscher zur Erwärmung des Motorenöls durch die Temperatur der Verbrennungsgase vorgesehen ist. Im Wesentlichen ist an das Abgasrohr ein Abzweig als ein Bypass zur Umleitung der Verbrennungsgase zu dem innerhalb der Ölwanne angeordneten Wärmetauscher angeschlossen. Mittels einer innerhalb des Abgasrohrs angeordneten, verstellbaren Abgasklappe kann der Bypass definiert mit heißem Abgas beschickt oder abgesperrt werden.

Aus der WO 02/090730 A1 ist des Weiteren eine Vorrichtung zur Erwärmung eines Betriebsmittels bekannt, welche sich im Wesentlichen dadurch vom vorgenannten Stand der Technik unterscheidet, dass ein vom Betriebsmittel durchflossenes sogenanntes Aufheizrohr direkt im Abgasrohr angeordnet ist. Durch die vorstehende Maßnahme lassen sich die Temperatur des Motorenöls und damit dessen Viskosität gezielt beeinflussen sowie die Reibungsverluste im Motor gerade in der Startphase wesentlich verringern. Ferner sind ein größeres Potential für Kraftstoffeinsparungen sowie eine Verringerung der Abgastemperatur zu verzeichnen, was sich wiederum vorteilhaft auf NOx-Speicherkonzepte auswirkt.

In der Praxis sind auch bereits weitere Serienanwendungen bekannt, die den Motorölkühler im Warmlauf zusätzlich dazu nutzen, um Wärme vom Motorkühlmittel ins Motoröl zu übertragen und auf diesem Wege die Motorreibleistung zu verringern und Kraftstoff zu sparen. Dies ist speziell bei Motoren hilfreich, bei denen sich das Motorkühlmittel wesentlich schneller erwärmt als das Motoröl.

Der DE 10 2007 030 463 A1 liegt die Aufgabe zugrunde, eine Anordnung zur Erwärmung zumindest eines Betriebsmittels einer Verbrennungskraftmaschine zu schaffen, die im Hinblick auf eine etwaige Anhebung des Motor-Temperaturniveaus weiter verbessert ist, und zwar derart, dass ein deutlich schnelleres Erreichen der Motor-Betriebstemperatur gerade im Motor-Kaltstart gestattet ist, wodurch der Kraftstoffverbrauch, der CO₂-Ausstoß und der Verschleiß verringerbar sind. Hierzu dient die Anordnung zur Erwärmung zumindest eines Betriebsmittels einer Verbrennungskraftmaschine, bei der ausgehend von einer Abgasanlage heiße Verbrennungsgase über zumindest eine Bypassleitung durch einen im Ölsumpf der Ölwanne des Motorblocks der Verbrennungskraftmaschine angeordneten und das in der Ölwanne befindliche Motorenöl erwärmenden ersten Wärmetauscher hindurchgeführt werden, wobei in der Ölwanne zumindest ein zweiter Wärmetauscher angeordnet ist, der seinerseits in einen Kühlmittelkreislauf der Verbrennungskraftmaschine eingebunden ist.

Demgegenüber besteht die Aufgabe gemäß der DE 10 2006 013 867 A1 darin, die Motorölkühlerwirksamkeit im Schmierölkreislauf einer Verbrennungskraftmaschine in Kraftfahrzeugen mit kühlmittelgekühltem Motorölkühler so auszubilden, dass bereits mit einem relativ kleinen und kostengünstigen Motorölkühler die oben angesprochenen Vorteile im Motorwarmlauf erschließbar werden. Hierzu strömt bei relativ kaltem Motoröl ohne Einbuße an Motorbetriebssicherheit mehr Motoröl durch den Motorölkühler und dennoch ist bei hoher Öltemperatur und dem potentiellen Risiko eines zu geringen Öldrucks bei geringer Motordrehzahl genügend Öldruck an allen Stellen der Verbrennungskraftmaschine verfügbar. Eine Verbesserung des Wärmeübergangs im Ölkühler im Warmlauf ist die Folge, die nicht nur auf den höheren Öldurchsatz zurückzuführen ist, sondern auch auf die Tatsache, dass sich angesichts des höheren Öldurchsatzes auch weniger strömungsarme Zonen in den einzelnen Ölkanälen des Ölkühlers einstellen.

Demgegenüber betrifft die DE 10 2006 048 929 A1 eine Brennkraftmaschine mit einem Zylinderkurbelgehäuse, das mindestens einen von einem Zylinderkopf abgedeckten Zylinder aufweist, wobei die Brennkraftmaschine in einen Zylinderkühlraum und einen Kopfkühlraum aufgeteilte Kühlölräume, ein Schmiersystem, eine Ölpumpe, einen Ölkühler sowie Druckhalteventile aufweist, die miteinander verschaltet sind. Um mit einfachen Mitteln bestimmte Abgasemissionsgrenzwerte zu erfüllen, wird die Verbrennungstemperatur im Vollastbetrieb abgesenkt. Dies wird dadurch erreicht, dass ausgangsseitig aus dem Ölkühler ein Druckhalteventil angeordnet ist, das einen Ölteilstrom über eine direkte Absteuerleitung in das Zylinderkurbelgehäuse oder eine das Zylinderkurbelgehäuse bodenseitig verschließende Ölwanne absteuert. Hierdurch wird der Öldurchsatz durch den Ölkühler und damit die Kühlleistung erhöht, um die Temperatur des Öls zu senken.

Als nachteilig erweist sich bei diesem Stand der Technik der für die Temperierung des der Brennkraftmaschine zugeführten Schmiermittels erforderliche Aufwand, um beispielsweise durch zusätzliche Heizelemente die Schmiermitteltemperatur zu erhöhen.

Vor diesem Hintergrund liegt der Erfindung die Aufgabe zugrunde, mit einfachen Mitteln bedarfsweise eine schnelle Erhöhung der Schmiermitteltemperatur zu erreichen. Weiterhin soll ein hierfür geeignetes Arbeitsverfahren geschaffen werden.

Die erstgenannte Aufgabe wird gelöst mit einer Schmiermittelversorgungseinrichtung gemäß den Merkmalen des Patentanspruchs 1. Die Unteransprüche betreffen besonders zweckmäßige Weiterbildungen der Erfindung.

Erfindungsgemäß ist also eine Schmiermittelversorgungseinrichtung vorgesehen, bei der die Schmiermittelversorgungseinrichtung ein an einer Bypassleitung angeordnetes Bypassventil aufweist, durch welches zumindest ein Teilstrom des Schmiermittels unter Umgehung des Wärmetauschers der Brennkraftmaschine zuführbar ist. Hierdurch kann in einem Betriebszustand der Brennkraftmaschine, in dem diese den optimalen Betriebstemperaturbereich noch nicht erreicht hat, das Schmiermittel an dem als Ölkühler ausgeführten Wärmetauscher vorbeigeführt werden. Hierdurch werden die thermischen Verluste in dieser auch als Kaltlaufphase bezeichneten Betriebsphase wesentlich reduziert, sodass es zu einer wesentlich schnelleren Erwärmung der Brennkraftmaschine kommt. Dabei kann auf zusätzliche Heizelemente verzichtet und dadurch zugleich der konstruktive Aufwand minimiert werden. Hierzu ermöglicht die Bypassleitung mit einfachen Mitteln eine vorübergehende Umgehung des Wärmetauschers, indem das Schmiermittel aus der Ölwanne mittels der Ölsumpfpumpe durch die Schmiermittelzuführleitung und einem darin angeordneten Ölfilter in einer Bypassstellung des Bypassventils unmittelbar einer der Brennkraftmaschine zugeordneten Ölgalerie zugeführt wird. Zugleich wird der Strömungswiderstand durch die Umgehung des Wärmetauschers vermindert, sodass die In diesem Temperaturbereich hohe Viskosität des Schmiermittels ausgeglichen und die erforderliche Leistung der Schmiermittelpumpe entsprechend reduziert werden kann.

Das Bypassventil könnte selbsttätig beispielsweise in Abhängigkeit der Temperatur des einströmenden Schmiermittels die entsprechend geöffnete oder geschlossene Position einnehmen. Weiterhin könnte die Betätigung durch ein druck- oder thermosensitives Element gesteuert werden. Besonders vorteilhaft ist es hingegen, wenn das Bypassventil als ein mittels eines elektrischen Aktuators betätigbares Schaltventil ausgeführt ist, sodass die Betätigung des Bypassventils von einer zentralen Steuereinheit ausgelöst werden kann. Dadurch können in das Steuerprogramm auch weitere betriebsabhängige Messwerte und Parameter einfließen, um so beispielsweise den Temperaturbereich für die geöffnete Position des Bypassventils variabel anpassen zu können.

Eine besonders vorteilhafte Ausführungsform der Erfindung wird dadurch erreicht, dass das Bypassventil einen in einer Schiebeführung axial beweglichen Ventilschaft und einen damit stirnseitig verbundenen Dichtungskolben aufweist. Hierzu ist das ähnlich einem Gaswechselventil innerhalb der Brennkraftmaschine ausgeführte Bypassventil in einem Rohrstück geführt, sodass der als Schieber wirkende Dichtungskolben den Schmiermitteldurchfluss festlegt. Insbesondere wird hierzu der durchströmbare Bereich begrenzt und die Verteilung variabel festgelegt.

Bei einer anderen, ebenfalls besonders Erfolg versprechenden Abwandlung der Erfindung hat das Bypassventil ein schwenkbewegliches Schließelement, welches mittels einer Drehaktuatorik beweglich ist. Hierdurch.wird ein besonders kompaktes und einfach zu realisierendes Bypassventil geschaffen, welches in einem Rohrstück lediglich um die Längsachse des Rohrstücks verschwenkt wird und je nach Winkelstellung den Schmiermittelstrom in unterschiedliche Richtungen ablenkt.

Weiterhin ist es besonders zweckmäßig, wenn das Bypassventil entgegen der Rückstellkraft eines Federelements in eine die Bypassleitung zumindest teilweise freigebende Position beweglich Ist, sodass bei einem Ausfall des elektrischen Aktuators die Bypassleitung durch die Federkraft des Federelements verschlossen wird und somit eine Überhitzung des Schmiermittels Im Fahrbetrieb ausgeschlossen ist.

Grundsätzlich kann der Volumenstrom des Schmiermittels variabel dem Wärmetauscher oder der Bypassleitung zugeführt werden. Gemäß einer bevorzugten Ausführungsform ist mittels des Bypassventils der gesamte Schmiermittelstrom entweder dem Wärmetauscher oder der Bypassleitung zuführbar.

Weiterhin erweist es sich als besonders praxisgerecht, wenn das Bypassventil integraler Bestandteil des Wärmetauschers ist, um so den erforderlichen Bauraum so gering wie möglich zu halten. Das Bypassventil kann hierzu in ein bereits vorhandenes Rohrstück des Wärmetauschers eingesetzt werden.

Bei einer anderen, ebenfalls besonders empfehlenswerten Abwandlung weist die Schmiermittelversorgungseinrichtung einen Sensor zur Erfassung der Temperatur der Brennkraftmaschine auf, sodass auch auf diesem Wege die zu erwartende Kühlleistung des Wärmetauschers berechnet und bei der Einstellung der geschlossenen oder geöffneten Position des Bypassventils entsprechend berücksichtigt werden kann.

Die weitere Aufgabe, ein Verfahren zum Betrieb einer einen Wärmetauscher aufweisenden Schmiermittelversorgungseinrichtung einer Brennkraftmaschine zu schaffen, wird erfindungsgemäß dadurch gelöst, dass die Temperatur des Schmiermittels oder der Brennkraftmaschine erfasst wird und bei Unterschreiten eines vorbestimmten unteren Temperatur-Grenzwerts zumindest ein Teilstrom des Schmiermittels unter Umgehung des Wärmetauschers durch eine Bypassleitung der Brennkraftmaschine zugeführt wird. Hierdurch wird erreicht, dass der Schmiermittelfluss in einem niedrigen Temperaturbereich, insbesondere während einer Kaltlaufphase, um den Wärmetauscher herumgeführt wird. Hierdurch wird in einfacher Welse die Kaltlaufphase verkürzt, bis die Brennkraftmaschine die gewünschte Arbeitstemperatur erreicht hat, in welcher die Bypassleitung verschlossen und der Schmiermittelstrom durch den Wärmetauscher geleitet wird. Der Temperaturgrenzwert kann zu diesem Zweck fest eingestellt oder auf der Basis weiterer erfasster Parameter oder Messwerte variabel eingestellt werden. Beispielsweise kann die Umgebungstemperatur erfasst werden, aus der die Kühlleistung errechnet und daraus eine variable Aufteilung des Volumenstromanteils bestimmt wird, welcher der Bypassleitung einerseits und dem Wärmetauscher andererseits zugeführt wird.

Die Temperatur des Schmiermittels führt zu einer veränderten Viskosität, die zu einem darauf basierenden, selbsttätigen Öffnen oder Schließen des Bypassventils führt. Besonders hilfreich ist es hingegen, wenn gemäß einer weiteren vorzugsweisen Ausgestaltung das Bypassventil elektrisch betätigt wird, wobei die Betätigung entgegen einer Rückstellkraft erfolgt, sodass bei einem Ausfall der Steuerung die Bypassleitung geschlossen wird.

Die Erfindung lässt zahlreiche Ausführungsformen zu. Zur weiteren Verdeutlichung ihres Grundprinzips sind zwei davon in der Zeichnung beispielhaft dargestellt und werden nachfolgend beschrieben. Diese zeigt jeweils in einer teilweise geschnittenen Ansicht in
- Fig.: 1 eine Schmiermittelversorgungseinrichtung mit einem Bypassventil in einer geschlossenen Position;
- Fig. 2: die in der Figur 1 gezeigte Schmiermittelversorgungseinrichtung in einer geöffneten Position des Bypassventils;
- Fig. 3: eine Variante einer Schmiermittelversorgungseinrichtung mit einem Bypassventil in einer geschlossenen Position;
- Fig. 4: die in der Figur 3 gezeigte Schmiermittelversorgungseinrichtung in einer geöffneten Position des Bypassventils.

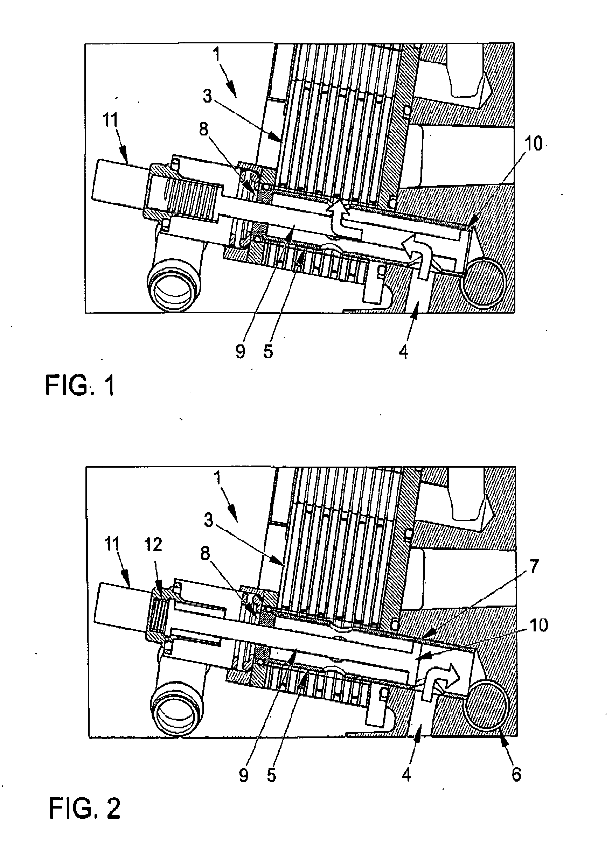

In den Figuren 1 und 2 ist eine erste Variante einer erfindungsgemäßen Schmiermittelversorgungseinrichtung 1 einer nicht weiter dargestellten Brennkraftmaschine gezeigt. Die Schmiermittelversorgungseinrichtung 1 umfasst eine der Brennkraftmaschine zugeordnete Schmiermittelzuführleitung, einen von dem Schmiermittel durchströmbaren Wärmetauscher 3 sowie eine Schmiermitteldruckleitung 4, die mit einer nicht gezeigten Schmiermitteiwanne der Brennkraftmaschine verbunden ist. In Figur 1 ist der gewöhnliche Betriebszustand dargestellt, In welchem das Schmlermittel durch ein Rohrstück 5 In den von Kühlwasser durchströmbaren Wärmetauscher 3 eintritt und anschließend in die Schmiermittelzuführleitung austritt. Demgegenüber zeigt Figur 2 einen Betriebszustand, beispielsweise in einer Kaltlaufphase, bei dem der Schmiermittelfluss unter Umgehung des Wärmetauschers 3 einer mit der Brennkraftmaschine verbundenen Bypassleitung 6 zugeführt wird. Hierzu hat die Schmiermittelversorgungseinrichtung 1 ein Bypassventil 7 mit einem in einer Schiebeführung 8 axial beweglichen Ventilschaft 9, welcher einen Dichtungskolben 10 zur variablen Aufteilung des Schmiermittelstroms und der wahlweisen Zuführung zu der Bypassleitung 6 oder dem Wärmetauscher 3 dient. Hierzu ist das Bypassventil 7 mittels eines elektrischen Aktuators 11 entgegen der Rückstellkraft eines Federelements 12 in eine die Bypassleitung 6 vollständig freigebende Position beweglich.

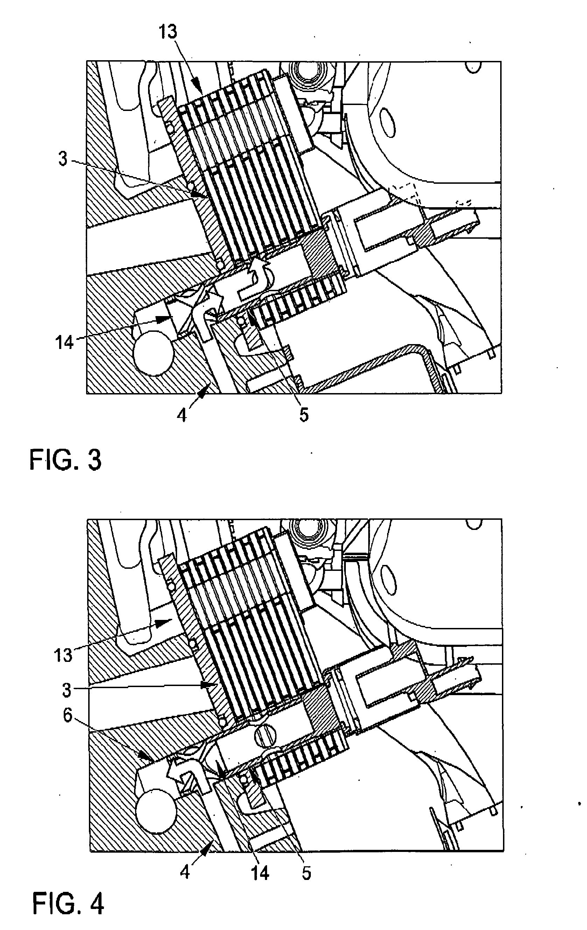

In den Figuren 3 und 4 ist eine weitere Variante einer erfindungsgemäßen Schmiermittelversorgungseinrichtung 13 dargestellt, deren grundsätzlicher Aufbau im Wesentlichen der in den Figuren 1 und 2 gezeigten Variante entspricht. Im Unterschied zu dieser ersten Variante ist ein Bypassventil 14 dabei jedoch als ein in dem Rohrstück 5 um dessen Längsachse schwenkbewegliches Schließelement ausgeführt. In Abhängigkeit der Winkelstellung wird der Schmiermittelstrom aus der Schmiermitteldruckleitung 4 in der in Figur 3 gezeigten Position dem Wärmetauscher 3 oder, wie in Figur 4 gezeigt, der Bypassleitung 6 zugeführt. Zur Betätigung dient dabei ein nicht gezeigter Drehaktuator. Der Aufbau wird dadurch noch kompakter und zugleich die Abdichtung auch bei einem vergleichsweise hohen Schmiermitteidruck vereinfacht.

## Patentansprüche

1. Eine zur Schmiermittelversorgung einer Brennkraftmaschine bestimmte Schmiermittelversorgungseinrichtung (1, 13) mit einer der Brennkraftmaschine zugeordneten Schmiermittelzuführleitung, einer Schmiermittelrückführleitung und einem in Strömungsrichtung vor der Brennkraftmaschine in der Schmiermittelzuführleitung angeordneten Wärmetauscher (3), **dadurch gekennzeichnet, dass** die Schmiermittelversorgungseinrichtung (1, 13) ein an einer Bypassleitung (6) angeordnetes
Bypassventil (7, 14) aufweist, durch welches zumindest ein Teilstrom des Schmiermittels unter Umgehung des Wärmetauschers (3) der Brennkraftmaschine zuführbar ist.

2. Schmiermittelversorgungseinrichtung (1, 13) nach Anspruch 1, **dadurch gekennzeichnet, dass** das Bypassventil (7, 14) als ein mittels eines Aktuators (11) betätigbares Schaltventil ausgeführt ist.

3. Schmiermittelversorgungseinrichtung (1) nach den Ansprüchen 1 oder 2, **dadurch gekennzeichnet, dass** das Bypassventil (7) einen in einer Schiebeführung (8) axial beweglichen Ventilschaft (9) und einen damit verbundenen Dichtungskolben (10) aufweist.

4. Schmiermittelversorgungseinrichtung (13) nach zumindest einem der vorangehenden Ansprüche, **dadurch gekennzeichnet, dass** das Bypassventil (14) ein schwenkbewegliches Schließelement hat, welches mittels eines Drehaktuators beweglich ist.

5. Schmiermittelversorgungseinrichtung (1, 13) nach zumindest einem der vorangehenden Ansprüche, **dadurch genennzeichnet, dass** das Bypassventil (7, 14) entgegen der Rückstellkraft eines Federelements (12) in eine die Bypassleitung (6) zumindest teilweise freigebende Position beweglich ist.

6. Schmiermittelversorgungseinrichtung (1, 13) nach zumindest einem der vorangehenden Ansprüche, **dadurch gekennzeichnet, dass** mittels des Bypassventils (7, 14) der gesamte Schmiermittelstrom entweder dem Wärmetauscher (3) oder der Bypassleitung (6) zuführbar ist.

7. Schmiermittelversorgungseinrichtung (1, 13) nach zumindest einem der vorangehenden Ansprüche, **dadurch gekennzeichnet, dass** das Bypassventil (7, 14) als ein integraler Bestandteil des Wärmetauschers (3) ausgeführt ist.

8. Schmiermittelversorgungseinrichtung (1, 13) nach zumindest einem der vorangehenden Ansprüche, **dadurch gekennzeichnet, dass** die Schmiermittelversorgungseinrichtung (1, 13) einen Sensor zur Erfassung der Temperatur der Brennkraftmaschine aufweist.

9. Schmiermittelversorgungseinrichtung (1, 13) nach zumindest einem der vorangehenden Ansprüche, **dadurch gekennzeichnet, dass** der Wärmetauscher (3) einen Wasser-Ölkühler aufweist.

10. Verfahren zum Betrieb einer einen Wärmetauscher (3) aufweisenden Schmiermittelversorgungseinrichtung (1, 13) einer Brennkraftmaschine, **dadurch gekennzeichnet, dass** die Temperatur des Schmiermittels und/oder der Brennkraftmaschine erfasst wird und bei Unterschreiten eines vorbestimmten Temperatur-Grenzwerts zumindest ein Teilstrom des Schmiermittels unter Umgehung des Wärmetauschers (3) durch eine Bypassleitung (6) der Brennkraftmaschine zugeführt wird.

11. Verfahren nach Anspruch 10, **dadurch gekennzeichnet, dass** bei Erreichen eines oberen Temperatur-Grenzwerts das Bypassventil (7, 14) in der Bypassleitung (6) geschlossen wird.

12. Verfahren nach Anspruch 10 oder 11, **dadurch gekennzeichnet, dass** zusätzlich die Umgebungstemperatur erfasst wird.

13. Verfahren nach zumindest einem der vorangehenden Ansprüche 10 bis 12, **dadurch gekennzeichnet, dass** das Bypassventil (7, 14) elektrisch betätigt wird.
